Europäisches Patentamt

European Patent Office

Office européen des brevets

(11) Veröffentlichungsnummer: **0 118 945**
**B1**

(12) **EUROPÄISCHE PATENTSCHRIFT**

(45) Veröffentlichungstag der Patentschrift:
18.01.89

(51) Int. Cl.⁴: **F 16 L 11/00, F 16 L 9/19**

(21) Anmeldenummer: **84200255.2**

(22) Anmeldetag: **22.02.84**

(54) Flexibler Rohrverbund und Verfahren zu seiner Herstellung.

(30) Priorität: **10.03.83 DE 3308482**

(43) Veröffentlichungstag der Anmeldung:
**19.09.84 Patentblatt 84/38**

(45) Bekanntmachung des Hinweises auf die Patenterteilung:
**18.01.89 Patentblatt 89/3**

(84) Benannte Vertragsstaaten:
**AT BE CH FR GB IT LI LU NL SE**

(56) Entgegenhaltungen:
**DE-A- 3 045 388
DE-U- 1 861 324
DE-U- 1 863 425
DE-U- 1 957 972
FR-A- 2 225 680
US-A- 2 971 538
US-A- 3 529 632**

(73) Patentinhaber: **REHAU AG + Co, Rheniumhaus,
D-8673 Rehau (DE)**

(72) Erfinder: **Zwilling, Hermann,
Dietrich-Bonhöfer-Strasse 6, D-8673 Rehau (DE)**

## Beschreibung

Die Erfindung betrifft einen flexiblen Rohrverbund aus einzelnen Kunststoffrohren, wobei die Einzelrohre nach ihrer Herstellung zu einem Rohrbündel derart zusammengefasst sind, dass die untereinander benachbarten Rohre längsverlaufend linienförmig aneinander liegen, wobei der Rohrverbund die Gestalt eines geschlossenen Hohlprofils aufweist, sowie ein Verfahren zur Herstellung dieses Rohrverbundes.

Aus der DE-A 30 45 388 ist ein Rohrverbund bekannt geworden, bei dem die Einzelrohre des Verbundes miteinander verseilt werden. Die bekannte Methode der Verseilung soll nach der Vorveröffentlichung mit einem möglichst langen Schlag angewendet werden, damit beim Einziehen von Kabeln in die Einzelrohre des Rohrverbundes keine zu grossen Reibungskräfte auftreten. Die Vorveröffentlichung beschreibt auch die Verbindung mehrerer Rohre parallel zueinander mittels mechanischer Befestigungselemente zu einem Rohrverbund. Dieser Rohrverbund kann zusätzlich von einem gemeinsamen Mantel umgeben sein.

Im Falle der Verseilung sind die Rohre mit einem längsverlaufenden Drall in dem Rohrbündel angeordnet. Auch bei der Verwendung des vorgeschlagenen langen Schlages bei der Herstellung eines solchen Dralls ergeben sich beim Einziehen der Kabel auf grössere Längen durch diese Verdrallung Schwierigkeiten. Die ausserdem vorgeschlagenen mechanischen Befestigungselemente ermöglichen es zwar, Einzelrohre ohne Drall in einem Rohrverbund festzulegen.

Die Befestigungselemente greifen jedoch zwangsläufig wenigstens teilweise auch über den äusseren Umfang der aussenliegenden Einzelrohre und vergrössern somit – zumindest abschnittsweise – den Aussendurchmesser des Rohrverbundes, was wiederum nachteilig sein kann bei der Umgebung mit einem gemeinsamen Mantel. Dieser gemeinsame Mantel wird als Kabelschutzrohr beschrieben, welches bereits verlegt sein kann. In ein solches Kabelschutzrohr wird dann der Rohrverbund aus dem Stand der Technik eingezogen, wobei durch die überstehenden Teile der mechanischen Befestigungsmittel schon beim Einziehen Schwierigkeiten entstehen. Hinzu kommt noch, dass wegen der überstehenden mechanischen Befestigungsmittel die Einzelrohre im Durchmesser entsprechend kleiner gestaltet sein müssen oder entsprechend weniger Einzelrohre verwendet werden können, was gleichermassen für die optimale Ausnutzung des Rohrverbundes nachteilig ist.

Aus dem DE-U 82 13 407.3 ist ein Rohrbündel aus Kunststoffrohren bekannt geworden, welches zur Einführung in einen Kabelkanal dient. Dieses Rohrbündel ist aus mehreren Einzelrohren aufgebaut, die untereinander durch einstückig mit den Rohren hergestellte Abstandstege zu einer Matte vereinigt sind. Diese Abstandstege sind flexibel und gestatten es, die Einzelrohre derart aneinander anzulegen dass die benachbarten Rohre längsverlaufend linienförmig aneinander liegen. Die untereinander mittels der Abstandstege verbundenen Einzelrohre sollen in zusammengeschwenktem Zustand in einen Kabelkanal eingezogen werden. Hier treten jedoch Schwierigkeiten auf, da das Zusammenschwenken der Rohre direkt beim Einzug in den Kabelkanal erfolgen muss und demzufolge entsprechende Vorrichtungen benötigt werden. Ausserdem steht zu befürchten, dass das lose Anliegen der Aussenrohre nach der Verschwenkung zu einer solchen Flexibilität des Rohrbündels führt, dass insbesondere auf längere Einzugsstrecken das Einziehen des Rohrbündels in einen Kabelkanal unmöglich wird.

Aus dem DE-U 1 861 324 ist ferner ein Schlauchgebilde bekannt geworden, welches aus fest miteinander verbundenen Einzelschläuchen besteht. Hierbei sind um einen zentral liegenden Innenschlauch miteinander in Berührung stehende Schläuche, vorzugsweise kreisförmig, angeordnet. Der Raum zwischen dem Innenschlauch und den Aussenschläuchen ist mit einer die Schläuche miteinander verbindenden Haftmischung ausgefüllt. Die Aussenschläuche selbst können mit einer Aussenhaut umgeben sein, welche aus einer oder mehreren Gewebelagen oder Kunststoffschichten bestehen.

Die Einzelschläuche dieses Schlauchverbundes stehen untereinander in linienförmiger Berührung. Eine Flexibilität des Schlauchverbundes in sich selbst ist jedoch nicht gegeben, da nach der Veröffentlichung die einzelnen Schläuche über die Haftmischung, die die Zwischenräume zwischen den Einzelschläuchen ausfüllt, miteinander verklebt sind.

Aus der US-A 3 529 632 ist ein Schlauchbündel bekannt geworden, bei dem eine Vielzahl von kleinvolumigen Schläuchen durch eine isolierende Hülle umgeben ist. Dabei stehen lediglich die äusseren Schläuche des Schlauchbündels an ihrer nach aussen gerichteten Oberfläche mit der Isolierhülle in Verbindung. Das auf diese Weise präparierte Schlauchbündel wird dann in einem Querspritzkopf im Extrusionsverfahren mit einer dicken Kunststoffschicht umgeben. Auf diese Weise wird ein wärmeisoliertes und stossgeschütztes Schlauchbündel erzeugt. Dieses Bündel besitzt jedoch in sich keine Flexibilität, sondern ist durch die dicke isolierende Kunststoff-Aussenschicht in hohem Masse unflexibel.

Hier setzt die Erfindung ein, die es sich zur Aufgabe gestellt hat, einen Rohrverbund anzugeben, bei dem ohne Zuhilfenahme mechanischer Verbindungsmittel die Einzelrohre des Verbundes fest miteinander verhaftet und doch so flexibel aneinander gehalten sind, dass ein Aufwickeln des Rohrverbundes auf Wickeltrommeln genau so möglich ist wie das ungehinderte Einziehen des Rohrverbundes in Schutzrohre z.B. in Kabelkanäle.

Ferner ist es Aufgabe der Erfindung, die Einzelrohre des Rohrverbundes so aneinander bzw. aufeinander zu befestigen, dass ohne weitere Verschwenkung einzelner Rohre ein fester Verbund untereinander in der Form erzielbar ist, das beim Einziehen des Verbundes in ein Schutzrohr die optimale Ausnutzung des Schutzrohres gewährleistet ist. Darüber hinaus soll es möglich sein, den Rohrverbund ohne Schutzrohr frei in der Erde zu verlegen, ohne dass ein ungewolltes Wechseln der Verlegeebene zu befürchten wäre.

Erfindungsgemäss wird dazu vorgeschlagen, dass die Verbindung der Einzelrohre durch eine hautförmige Aussenbeschichtung erfolgt, welche voll umfänglich oder in Teilbereichen auch die den äusseren Umfang des Rohrverbundes bildenden Umfangsbereiche der Einzelrohre ausserhalb ihrer Berührungslinien durchgehend längsverlaufend fest aufgebracht ist.

Der erfindungsgemässe Rohrverbund ist in sich so flexibel, dass ein Aufwickeln auf entsprechende Wickeltrommeln möglich ist, ohne dass eine bleibende Beeinträchtigung des Durchführungsquerschnittes der Einzelrohre befürchtet werden müsste. Die Tatsache, dass die Verbindung der Einzelrohre durch eine hautförmige Aussenbeschichtung erfolgt, die ausserhalb der Berührungslinien der benachbarten Rohre liegen, ermöglicht eine in den Grenzen des Verbundes erzielbare Verschiebung der Einzelrohre aufeinander, die ihrerseits auch mit ihren in den Grenzen der Wanddicke flexiblen Rohrwandungen für die Gesamtflexibilität des Rohrverbundes sorgen.

Der erfindungsgemässe Rohrverbund kann eine verschiedene Zahl von Rohren unterschiedlicher Durchmesser aufweisen, wobei es zur Herstellung einer für das Einziehen des Rohrverbundes in einen runden Kabelkanal optimalen Aussenkontur zweckmässig sein kann, eine ungerade Anzahl von Einzelrohren zu wählen, derart, dass eines der Einzelrohre einen grösseren Durchmesser, die beiden daran anschliessenden Einzelrohre einen mittleren Durchmesser und die daran wieder anschliessenden Einzelrohre einen kleineren Durchmesser aufweisen.

Auf diese Weise lässt sich erreichen, dass die tangentialen äusseren Berührungslinien der Einzelrohre auf einem gemeinsamen Umfangskreis liegen. Zu dem erfindungsgemässen Rohrverbund kann jedoch auch jede andere Zusammensetzung der Einzelrohre zusammengefasst werden.

Die von der Aussenbeschichtung abgewandten Umfangsbereiche der Einzelrohre sind gleichzeitig die innere Begrenzung des den Rohrverbund bildenden Hohlprofils.

Wesentlich für den erfindungsgemässen Rohrverbund ist die Tatsache, dass die Einzelrohre in ihren frei liegenden Aussenwandbereichen für die Herstellung des festen, jedoch in sich flexiblen Rohrverbundes vorbereitet werden. Diese Vorbereitung kann durch Aufbringen eines Haftvermittlers oder eines Klebers erfolgen. Die derart vorbehandelten Aussenwandbereiche werden dann mit einer beispielsweise erwärmten Deckschicht aus Kunststoff abgedeckt, wobei der Haftvermittler oder der Kleber durch die Wärme der Deckschicht aktiviert wird. Auf diese Weise werden die benachbarten Einzelrohre im Bereich der vorbehandelten Wandungsteile zu einem festen Verbund der bereits beschriebenen Art untereinander zusammengefügt.

Die Vorbereitung der frei liegenden Aussenwandbereiche der Einzelrohre kann jedoch auch durch Erwärmen erfolgen, wodurch ein nachfolgender Schweissvorgang unterstützt werden kann. Dieses Erwärmen kann beispielsweise gleichzeitig mit dem Aufschmelzen eines Kunststoff-Schweissdrahtes erfolgen, wobei die die Einzelrohre verbindende Aussenbeschichtung aus diesem Kunststoff-Schweissdraht gebildet werden kann. Die Einzelrohre können in diesem Beispielsfall direkt oberhalb ihrer Berührungslinien miteinander verbunden werden.

Anstelle der Verklebung der hautförmigen Aussenbeschichtung mit den frei liegenden Aussenwandbereichen der Einzelrohre des Rohrverbundes kann diese Aussenbeschichtung auch im Wege der Verschweissung auf die frei liegenden Aussenwandbereiche aufgebracht werden. Hierbei kann in unmittelbarem Anschluss an das Zusammenfügen der benachbarten Rohre über die Aussenbeschichtung eine Abkühlung dieser Schicht erfolgen und damit das Schrumpfverhalten der Aussenbeschichtung derart ausgenutzt werden, dass die Aussenbeschichtung zusätzlich an die Aussenwandbereiche der Einzelrohre angepresst wird. Auf diese Weise wird der Rohrverbund der durch die Aussenbeschichtung miteinander verbundenen Einzelrohre zusätzlich gefestigt, ohne dem Rohrverbund die durch die frei beweglichen Berührungslinien immanente Flexibilität zu nehmen.

Das erfindungsgemässe Verfahren zur Herstellung des Rohrverbundes zeichnet sich dadurch aus, dass die den äusseren Umfang des Rohrverbundes bildenden Umfangsbereiche der Rohre des Rohrbündels ausserhalb ihrer Berührungslinien fortlaufend bis in den Bereich des Schmelzpunktes des Kunststoffmaterials erwärmt werden und die ebenfalls erwärmte Deckschicht bzw. die Teilverbindungen unmittelbar danach kontinuierlich auf die erwärmten Oberflächen der Einzelrohre des Rohrbündels aufgebracht werden und dass in unmittelbarem Anschluss daran durch Abkühlen die warme Deckschicht unter Ausnutzung ihres Schrumpfverhaltens zusätzlich an den Bereich der vorbehandelten Wandungsteile angepresst wird. Dieses Aufbringen kann durch Extrudieren, Wickeln oder dergleichen erfolgen. Die Aussenbeschichtung kann dabei über den gesamten äusseren Umfang des Rohrbündels erfolgen bzw. als Teilbeschichtung ausgebildet sein, welche die Einzelrohre lediglich in einem Bereich oberhalb ihrer Berührungslinien verbindet.

Das Verfahren zur Herstellung des erfindungsgemässen Rohrverbundes kann jedoch auch darin bestehen, dass die den äusseren Umfang, des Rohrverbundes bildenden Umfangsbereiche der Einzelrohre des Rohrbündels ausserhalb ihrer Berührungslinien fortlaufend mit einem Haftvermittler benetzt werden und die erwärmte Aussenbeschichtung bzw. die Teilverbindungen unmittelbar danach kontinuierlich auf die benetzten Oberflächen der Einzelrohre des Rohrbündels aufgebracht werden und dass in unmittelbarem Anschluss daran durch Abkühlen die warme Deckschicht unter Ausnutzung ihres Schrumpfverhaltens zusätzlich an den Bereich der vorbehandelten Wandungsteile angepresst wird.

Beim Aufbringen der Aussenbeschichtung im Klebeverfahren kann diese Aussenbeschichtung eine folienartige Hülle aus Kunststoff sein, die mit den frei liegenden Aussenwandbereichen der Einzelrohre und in ihren längsverlaufenden Randbereichen verklebt wird. Es kann sich jedoch auch um ein Kunststoffband handeln, wenn es beispielsweise spiralig um die Einzelrohre des Rohrverbundes herumgelegt und dabei mit den frei liegenden Aussenwandbereichen verklebt wird. Bei der Verschweissung der Aussenbeschichtung erfolgt eine Aufschmelzung der frei liegenden Aussenwandbereiche der Einzelrohre über den gesamten Teilumfang bzw. lediglich im Bereich oberhalb der Berührungslinien zweier nebeneinander liegender Einzelrohre und dann entweder ein Überextrudieren der Aussenbeschichtung bzw. ein Überschweissen der Bereiche oberhalb der Berührungslinien der Einzelrohre.

Es liegt auch im Bereich des erfindungsgemässen Verfahrens, als Aussenbeschichtung beispielsweise einen Schrumpfschlauch zu verwenden, der über die zusammengeführten Einzelrohre zur Bildung des Rohrverbundes gezogen wird. Im Anschluss an die Einführung der zusammengeführten Einzelrohre wird durch Aufbringung von Wärme der Schrumpfschlauch zum Schrumpfen gezwungen, wobei er sich fest um die äusseren Konturen der zusammengeführten Rohre legt und dadurch den erfindungsgemässen Rohrverbund erzeugt. Das Innere des Schrumpfschlauches kann dabei bekannterweise mit einem Haftvermittler oder einem Kleber belegt werden, so dass hier ausserhalb der Berührungslinien der benachbarten Einzelrohre eine feste, hautförmige Ummantelung des Rohrverbundes erzeugt wird.

Die Vorteile des nach dem erfindungsgemässen Verfahren hergestellten Rohrverbundes bleiben auch bei dieser Verbindungsart in vollem Umfang erhalten.

Das erfindungsgemässe Verfahren zur Herstellung des Rohrverbundes kann in kontinuierlicher Verfahrensweise, jedoch auch diskontinuierlich angewendet werden. Bei der kontinuierlichen Herstellung sind die Einzelrohre durch entsprechende Führungsmittel zu einem dem späteren Rohrverbund entsprechenden Bündel zusammengefasst und werden dann an den frei liegenden Aussenwandbereichen vorbehandelt und in der beschriebenen Weise miteinander verbunden. Bei der Aufspritzung der Aussenbeschichtung über den äusseren Umfang kann das vorher zusammengefasste Rohrbündel in einen heissen Spritzkopf eingeführt werden, über den zunächst die frei liegenden Aussenwandbereiche an der Oberfläche aufgeschmolzen und sodann die Aussenbeschichtung aufgespritzt werden.

Der nach dem erfindungsgemässen Verfahren hergestellte Rohrverbund wird nach der Verbundherstellung auf eine Wickeltrommel aufgewickelt und anschliessend der weiteren Verwendung zugeführt. Die erfindungsgemässe Flexibilität des Rohrverbundes kann durch die Wandstärken der Einzelrohre genauso beeinflusst werden wie durch die Stärke der Deck- bzw. Aussenbeschichtung. Es ist jedoch wesentlich darauf zu achten, dass diese Schichten eine solche Mindestdicke aufweisen, dass anschliessend beim Aufwickeln des nach dem erfindungsgemässen Verfahren hergestellten Rohrverbundes auf die Wickeltrommel ein Zusammenfallen bzw. Zusammenknicken des Rohrverbundes bzw. einzelner Rohre davon vermieden wird. In einem Beispielsfall wurde ein Rohrverbund mit folgenden Einzelrohren hergestellt:

Ein Rohr lichte Weite 35 mm, Wanddicke 2 mm
Zwei Rohre lichte Weite 25 mm, Wanddicke 1,5 mm
Zwei Rohre lichte Weite 20 mm, Wanddicke 1,5 mm

Die Rohre wurden so untereinander angeordnet, dass ein symmetrisches Gebilde entstand derart, dass die beiden mittleren Rohre sich an das grosse Rohr anschlossen und die kleineren Rohre unter sich und mit den beiden mittleren Rohren verbunden waren.

Die vollflächige Ummantelung am äusseren Umfang besass im gewählten Beispielsfall eine Wanddicke von 1,5 mm. Dieser Rohrverbund wurde nach der Herstellung unmittelbar in einem Wasserbad abgekühlt, wobei die Massetemperatur der Ummantelungsschicht zwischen 150° und 180°C auf Raumtemperatur durch Wasser zwischen 10° und 15°C heruntergekühlt wurde. Als Wasserbad wurde im gewählten Beispielsfall eine Vakuumkalibrierung verwendet. Der Rohrverbund wurde nach der Abkühlung einer Wickelvorrichtung zugeführt, wo er auf eine Wickeltrommel mit einem Wickeldurchmesser von 1,50 m aufgewickelt wurde. Im gewählten Beispielsfall wurden für die Einzelrohre des Rohrverbundes und die Ummantelungsschicht der Kunststoff Polyethylen verwendet. Erfindungsgemäss lassen sich darüber hinaus die Kunststoffe Polypropylen, Polyamid, Polybuten und andere geeignete Polyolefine verwenden.

Mit dem erfindungsgemässen Verfahren lässt sich der Rohrverbund auf verschiedene Weise herstellen. Zum einen können die Einzelrohre für sich hergestellt und gelagert werden. Je nach Anzahl der Einzelrohre des gewünschten Rohrverbundes werden diese dann aus dem Lager entnommen, in der gewünschten Form zusammengeführt, an den frei liegenden Aussenwandbereichen oberflächenbehandelt und dann – wie beschrieben – durch Verkleben oder Verschweissen miteinander verbunden. Es ist jedoch auch möglich, die Anzahl der Rohre in einem Werkzeug kontinuierlich zu erzeugen, diese Rohre kontinuierlich in der gewünschten Konstellation zusammenzuführen und dann, wie beschrieben, zu dem Rohrverbund zu vereinigen.

Bei der Verschweissung der Einzelrohre zu dem Rohrverbund ist zu beachten, dass beim Aufschmelzen der freien Oberflächenbereiche der Einzelrohre die Schweisstemperatur erreicht und ggf. geringfügig überschritten wird. Es ist jedoch weiter darauf zu achten, dass das Aufschmelzen nicht über die ganze Wanddicke des Einzelrohres erfolgt, da sonst beim Abkühlen Schrumpfungsprozesse im Einzelrohr eintreten würden, die seine für den späteren Einsatz erforderliche glatte Innenkontur nachteilig beeinflussen würden. So darf beim Schweissprozess die freie Oberfläche nur geringfügig aufgeschmolzen werden, derart, dass wenige hundertstel Millimeter der Wanddikke des Einzelrohres in diesem Bereich vom Aufwärmvorgang betroffen sind. Wird im oben beschriebenen Beispiel die Aussenbeschichtung am äusseren Umfang des Rohrbündels im Spritzkopf aufgebracht, dann besitzt die Innenkontur des Spritzkopfes bei der Verwendung von Polyethylenweich beispielsweise eine Temperatur von 195°C. Bei einer Laufgeschwindigkeit des Rohrbündels zwischen 2 und 4 m pro Minute wird damit die zu umspritzende Rohroberfläche auf die Schweisstemperatur von mindestens 108°C gebracht, bevor der Umspritzungsvorgang beginnt.

In der Zeichnung sind Ausführungsbeispiele des erfindungsgemässen Rohrverbundes schematisch dargestellt; es zeigt:

Fig. 1 einen Rohrverbund mit fünf Einzelrohren und einer Aussenbeschichtung im äusseren Oberflächenbereich.

Fig. 2 einen Rohrverbund mit fünf Einzelrohren und Teilverbindungen im Bereich oberhalb der Berührungslinien.

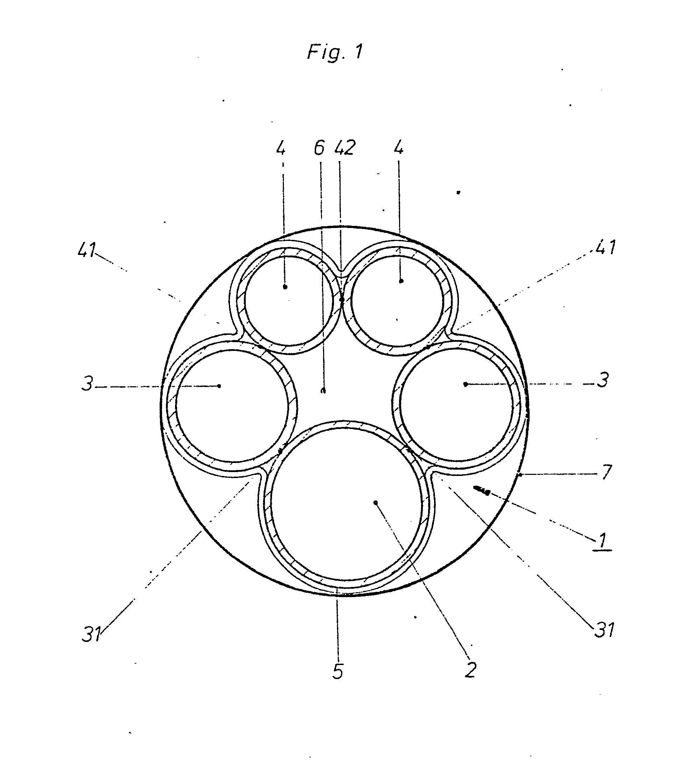

In Fig. 1 ist der Rohrverbund 1 derart dargestellt, dass das Rohr 2 mit dem grössten Innendurchmesser im unteren Bereich des Rohrverbundes 1 angeordnet ist. Daran anschliessend befinden sich die Rohre 3 mit dem mittleren Durchmesser, wobei sich die Rohre 3 im Berührungspunkt 31 mit dem Rohr 2 linienförmig auf der Oberfläche des Rohres 2 abstützen. Die Rohre 4 mit dem kleineren Durchmesser stützen sich linienförmig in Punkt 41 auf den Oberflächen der Rohre 3 ab und berühren sich gegenseitig linienförmig am Punkt 42. Der äussere Umfang des so geschaffenen Rohrverbundes ist mit einer vollflächigen Aussenbeschichtung 5 umgeben, wobei die Aussenbeschichtung 5 ausserhalb der Berührungslinien 31, 41, 42 endet. Im freien Innenraum 6 ist keine Verbindung oder Ummantelung der Einzelrohre 2, 3, 4 vorgesehen.

Wie in Fig. 1 angedeutet, kann der gezeigte Rohrverbund 1 innerhalb eines Umfangsmantels 7 angeordnet sein. Dieser Umfangsmantel 7 kann beispielsweise ein Kabelkanal oder Kabelschutzrohr sein.

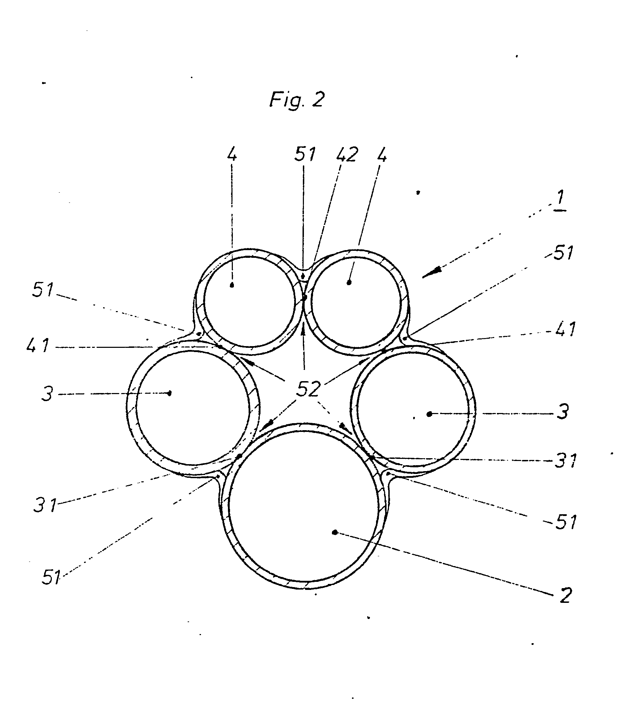

In Fig. 2 besitzt der dort gezeigte Rohrverbund 1 die Abmessungen der Einzelrohre 2, 3, 4 wie in Fig. 1 gezeigt. Im Unterschied zu Fig. 1 ist jedoch keine vollflächige Aussenbeschichtung 5 am äusseren Umfang des Rohrverbundes 1 angebracht, sondern es sind lediglich Teilverbindungen 51 ausserhalb der Berührungslinien 31, 41, 42 angeordnet. Diese Teilverbindungen 51 sind insgesamt am äusseren Umfang der Rohrverbundes gezeigt. Diese Teilverbindungen können durch Kleben oder Schweissen erzielt werden.

## Patentansprüche

1. Flexibler Rohrverbund (1) aus einzelnen Kunststoffrohren (2, 3, 4), wobei die Einzelrohre nach ihrer Herstellung zu einem Rohrbündel derart zusammengefasst sind, dass die untereinander benachbarten Einzelrohre längsverlaufend linienförmig aneinander liegen, wobei der Rohrverbund (1) die Gestalt eines geschlossenen Hohlprofils aufweist, dadurch gekennzeichnet, dass die Verbindung der Einzelrohre (2, 3, 4) durch eine hautförmige Aussenbeschichtung (5) erfolgt, welche voll umfänglich oder in Teilbereichen (51) auf die den äusseren Umfang des Rohrverbundes (1) bildenden Umfangsbereiche der Einzelrohre (2, 3, 4) ausserhalb ihrer Berührungslinien (31, 41, 42) durchgehend längsverlaufend fest aufgebracht ist.

2. Flexibler Rohrverbund nach Anspruch 1, dadurch gekennzeichnet, dass die von der Aussenbeschichtung (5, 51) abgewandten Umfangsbereiche der Einzelrohre (2, 3, 4) die innere Begrenzung des den Rohrverbund (1) bildenden Hohlprofils sind.

3. Flexibler Rohrverbund nach Ansprüchen 1 und 2, dadurch gekennzeichnet, dass die Aussenbeschichtung (5) bzw. die Teilverbindungen (51) mit den zugeordneten Wandbereichen der Einzelrohre (2, 3, 4) verschweisst ist.

4. Rohrverbund nach Ansprüchen 1 und 2, dadurch gekennzeichnet, dass die Aussenbeschichtung (5) bzw. die Teilverbindungen (51) mit den zugeordneten Wandbereichen der Einzelrohre (2, 3, 4) verklebt ist.

5. Verfahren zur Herstellung eines Rohrverbundes nach den Ansprüchen 1 und 2, dadurch gekennzeichnet, dass die den äusseren Umfang des Rohrverbundes bildenden Umfangsbereiche der Rohre (2, 3, 4) des Rohrverbundes (1) ausserhalb ihrer Berührungslinien (31, 41, 42) fortlaufend bis in den Bereich des Schmelzpunktes des Kunststoffmaterials erwärmt werden und die ebenfalls erwärmte Aussenbeschichtung (5) bzw. die Teilverbindungen (51) unmittelbar danach kontinuierlich auf die erwärmten Oberflächen der Einzelrohre (2, 3, 4) des Rohrverbundes (1) aufgebracht werden und dass in unmittelbarem Anschluss daran durch Abkühlen die warme Deckschicht unter Ausnutzung ihres Schrumpfverhaltens zusätzlich an den Bereich der vorbehandelten Wandungsteile angepresst wird.

6. Verfahren zur Herstellung eines Rohrverbundes nach den Ansprüchen 1 und 2, dadurch gekennzeichnet, dass die den äusseren Umfang des Rohrverbundes bildenden Umfangsbereiche der Einzelrohre (2, 3, 4) des Rohrverbundes (1) ausserhalb ihrer Berührungslinien (31, 41, 42) fortlaufend mit einem Haftvermittler benetzt werden und die erwärmte Aussenbeschichtung (5) bzw. die Teilverbindungen (51) unmittelbar danach kontinuierlich auf die benetzten Oberflächen der Einzelrohre (2, 3, 4) des Rohrverbundes (1) aufgebracht werden und dass in unmittelbarem Anschluss daran durch Abkühlen die warme Deckschicht unter Ausnutzung ihres Schrumpfverhaltens zusätzlich an den Bereich der vorbehandelten Wandungsteile angepresst wird.

## Claims

1. A flexible multiple subducting system (1) of individual plastic subducts (2, 3, 4), whereby after their production, these individual subducts are connected to form a multiple subducting system in which the adjacent individual subducts lie against one another in a straight line in axial direction, so that this multiple subducting system has the form of a closed hollow section, characterized in that the individual subducts (2, 3, 4) are connected by a skin-like outer coating (5) which is applied over the full length and around the full circumference or in certain areas (51) of the exposed surfaces of the individual subducts (2, 3, 4) forming the outer surface of the multiple subducting system (1) outside their points of contact (31, 41, 42).

2. A flexible multiple subducting system in accordance with Claim 1, characterized in that the surface areas of the individual subducts (2, 3, 4) facing away from the outer coating (5, 51) form the inner limit of the hollow section formed by the multiple subducting system (1).

3. A flexible multiple subducting system in accordance with Claims 1 and 2, characterized in that the outer coating (5) or partial junctions (51) is welded to the corresponding wall area of the individual subducts (2, 3, 4).

4. Multiple subducting system in accordance with Claims 1 and 2, characterized in that the outer coating (5) or partial junctions (51) is cemented to the corresponding wall area of the individual subducts (2, 3, 4).

5. A method of production for a multiple subducting system in accordance with Claims 1 and 2, characterized in that the outer surfaces of the individual subducts (2, 3, 4) away from the points of contact (31, 41, 42) forming the outer surface of the multiple subducting system (1) are heated to near the plasticification point of the plastic material, and the also heated outer coating (5) or the partial junctions (51) are immediately applied continuously to the heated outer surfaces of the individual subducts (2, 3, 4) of the multiple subducting system (1), and in that immediately thereafter, the shrinkage of the heated outer coating material during cooling is utilized in that the outer coating then presses onto the pretreated outer surfaces of the individual subducts.

6. A method of production for a multiple subducting system in accordance with Claims 1 and 2, characterized in that the outer surfaces of the individual subducts (2, 3, 4) away from the points of contact (31, 41, 42) forming the outer surface of the multiple subducting system (1) are wetted over their complete length with a coupling agent and that the heated outer coating (5) or the partial junctions (51) are immediately applied continuously to the wetted surfaces of the individual subducts (2, 3, 4) of the multiple subducting system (1), and in that immediately thereafter, the shrinkage of the heated outer coating material during cooling is utilized in that the outer coating then presses onto the pretreated outer surfaces of the individual subducts.

## Revendications

1. Combinaison souple de tubes (1) constituée de différents tubes en matière plastique (2, 3, 4), les différents tubes étant regroupés après leur fabrication en un faisceau de tubes de manière que les différents tubes isolés contigus soient disposés longitudinalement linéairement l'un contre l'autre, le faisceau de tubes (1) présentant la configuration d'un profil creux fermé, caractérisé en ce que la liaison des différents tubes (2, 3, 4) est assurée par un revêtement extérieur en forme de peau (5), qui est appliqué longitudinalement de façon continue et fixe sur les domaines périphériques des différents tubes (2, 3, 4) en dehors de leurs lignes de contact (31, 41, 42) sur la totalité de la périphérie ou dans des domaines partiels (51) des domaines périphériques des différents tubes (2, 3, 4) en dehors de leurs lignes de contact (31, 41, 42) constituant la périphérie extérieure de la combinaison de tubes.

2. Combinaison souple de tubes conforme à la revendication 1, caractérisée en ce que les domaines périphériques des différents tubes (2, 3, 4) regardant le revêtement extérieur (5, 51) constituent la limite intérieure du profil creux constituant la combinaison de tubes (1).

3. Combinaison souple de tubes conforme aux revendications 1 et 2, caractérisée en ce que le revêtement extérieur (5) ou les liaisons partielles (51) sont soudés aux domaines correspondants des parois des différents tubes (2, 3, 4).

4. Combinaison de tubes conforme aux revendications 1 et 2, caractérisée en ce que que le revêtement extérieur (5) ou les combinaisons partielles (51) sont collées aux domaines correspondants des parois des différents tubes (2, 3, 4).

5. Procédé de fabrication d'une combinaison de tubes conforme aux exigences 1 et 2, caractérisé en ce que la périphérie extérieure de la combinaison de tubes constituant les zones périphériques des tubes (2, 3, 4) de la combinaison de tubes (1) est réchauffée en dehors des lignes de contact (31, 41, 42) progressivement jusque dans le domaine du point de fusion de la matière plastique et la couche extérieur (5) éventuellement réchauffée ou les liaisons partielles (51) sont appliqués ensuite immédiatement de façon continue sur les surfaces réchauffées des différents tubes (2, 3, 4) de la combinaison de tubes (1) et également en ce que immédiatement ensuite de par le refroidissement la couche supérieure chaude est pressée en utilisant son comportement de retrait sur le domaine des parties prétraitées des parois.

6. Procédé de fabrication d'une combinaison de tubes selon les revendications 1 et 2, caractérisé par le fait que la périphérie extérieure de la combinaison de tubes constituant les domaines périphériques des différents tubes (2, 3, 4) de la combinaison de tubes (1) est enduite à l'extérieur des lignes de contact (31, 41, 42) de façon continue par un adhésif et que la couche extérieure réchauffée (5) ou les combinaisons partielles (51) sont appliquées immédiatement après de façon continue sur les surfaces enduites des différents tubes (2, 3, 4) de la combinaison de tubes (1) et également en ce que immédiatement ensuite de par le refroidissement la couche supérieure chaude est pressée en utilisant son comportement de retrait sur le domaine des parties prétraitées des parois.

Fig. 1

Fig. 2